# FASCICULE DE BREVET EUROPEEN

(11) **EP 2 735 781 B1**
(45) Date de publication et mention de la délivrance du brevet: **30.03.2016**
(21) Numéro de dépôt: 13193966.2
(22) Date de dépôt: 22.11.2013
(51) Int. Cl.: F16L 37/23

(54) **Elément femelle de raccord rapide et raccord rapide incorporant un tel élément**
Aufnahmeteil einer Schnellkupplung und Schnellkupplung mit einem solchen Aufnahmeteil
Female quick coupling element and quick acting coupling with such an element.

(30) Priorité: 23.11.2012 FR 1261180
(43) Date de publication de la demande: 28.05.2014
(73) Titulaire: STÄUBLI FAVERGES, 74210 Faverges (FR)
(72) Inventeur: Tiberghien, Alain-Christophe, 74320 SEVRIER (FR); Durieux, Christophe, 73200 GILLY SUR ISERE (FR)
(74) Mandataire: Myon, Gérard Jean-Pierre

(56) Documents cités:
- DE-A1- 4 025 385
- DE-A1-102009 048 328
- US-A1- 2009 273 183

## Description

L'invention a trait à un élément femelle de raccord rapide, ainsi qu'à un raccord rapide qui peut être utilisé pour la jonction amovible de deux canalisations de fluide sous pression et qui comprend, entre autres, un tel élément femelle.

Dans le domaine de la jonction amovible de canalisations parcourues par un fluide sous pression, il est connu d'utiliser un élément femelle de raccord qui comprend un système de verrouillage à billes d'un élément mâle comportant une collerette. Une bague extérieure de manoeuvre manuelle est généralement utilisée pour déverrouiller le raccord pour passer d'une configuration accouplée de l'élément mâle emmanché dans l'élément femelle à une configuration désaccouplée.

Un système de verrouillage à billes comporte généralement des billes faisant saillie dans un canal d'insertion de l'élément femelle et qui entrent en contact avec une face tronconique de la collerette de l'élément mâle et avec une paroi interne de la bague extérieure de manoeuvre pour, en configuration accouplée, empêcher le désaccouplement des éléments mâle et femelle. Lorsque le raccord est déverrouillé, la bague extérieure de manoeuvre est actionnée en coulissant vers l'arrière de l'élément femelle, pour libérer les billes de verrouillage afin de dégager l'élément mâle du canal d'insertion de l'élément femelle. Le désaccouplement est particulièrement difficile au moment où l'opérateur recule la bague de manoeuvre, lorsque les billes se trouvent coincées dans un cône où la configuration des pièces crée une résultante des forces qui s'oppose au mouvement naturel de désaccouplement. L'opérateur doit alors s'y prendre à plusieurs fois pour tenter de décoincer les billes, souvent à l'aveugle, dans des conditions d'accès au raccord difficile. Il en résulte une usure des pièces et des joints qui contribue à des dysfonctionnements du système de verrouillage et à la perte d'étanchéité du raccord.

Il est connu de US-A-2000/0273183 un élément femelle de raccord comprenant une bague intermédiaire apte à maintenir des billes de verrouillage en saillie dans une gorge périphérique de l'élément mâle en position accouplée. La bague intermédiaire est maintenue dans une position de verrouillage par un équilibre de pressions, et la fiabilité d'un tel fonctionnement peut être améliorée.

C'est à ces inconvénients qu'entend plus particulièrement remédier l'invention en proposant un nouvel élément femelle de raccord rapide qui est plus fiable et plus aisé à manoeuvrer que ceux de l'état de la technique, notamment grâce à une structure améliorée de son système de verrouillage à billes, tout en conservant un fonctionnement automatique et une structure compacte.

A cet effet, l'invention concerne un élément femelle de raccord rapide pour la jonction amovible de deux canalisations de fluide sous pression, cet élément femelle étant apte à recevoir en emmanchement, selon un axe longitudinal de cet élément femelle et dans un canal d'insertion situé d'un côté avant de l'élément femelle, un élément mâle de raccord, cet élément femelle comprenant :
- un corps traversé par un conduit de circulation de fluide,
- des billes de verrouillage de l'élément mâle dans une configuration accouplée, ces billes de verrouillage étant positionnées dans des logements radiaux du corps et aptes à faire saillie radialement dans le canal d'insertion,
- un organe de manoeuvre mobile en translation selon un axe longitudinal entre une première position, dans laquelle l'élément mâle est verrouillé dans l'élément femelle en configuration accouplée, et une seconde position, dans laquelle les éléments mâle et femelle sont en configuration désaccouplée, lors d'une manoeuvre de désaccouplement de l'élément mâle et de l'élément femelle, et
- une bague intermédiaire de verrouillage, mobile en translation axiale entre une position arrière dans laquelle une paroi interne de la bague intermédiaire maintient les billes de verrouillage en saillie dans le canal d'insertion en configuration accouplée du raccord et une position avant du côté avant de l'élément femelle, dans laquelle les billes de verrouillage sont libres d'être repoussées à l'opposé de l'axe longitudinal de l'élément femelle pour ne plus faire saillie dans le canal d'insertion, sous l'action de l'organe de manoeuvre lors de la manoeuvre de désaccouplement.

Cet élément femelle de raccord est caractérisé en ce qu'il comprend des moyens de verrouillage en position arrière de la bague intermédiaire en configuration accouplée du raccord, et en ce que le déverrouillage de la bague intermédiaire vers sa position avant est déclenché par le dégagement de l'organe de manoeuvre vers sa seconde position

Grâce à l'invention, du fait de la libération des billes dans leur logement lors de la manoeuvre de désaccouplement du raccord, le mouvement de désengagement de la bague intermédiaire, qui libère les billes, s'effectue vers l'avant de l'élément femelle, dans le même sens que le mouvement de dégagement de l'embout de l'élément mâle. Ceci facilite la manoeuvre de désaccouplement et réduit les efforts appliqués aux pièces et la difficulté de désaccouplement du raccord.

Selon des aspects avantageux mais non obligatoires de l'invention, un tel élément femelle de raccord peut incorporer une ou plusieurs des caractéristiques suivantes, prises dans toute combinaison techniquement admissible :
- L'élément femelle comprend un manchon interne monté dans le conduit de circulation de fluide, le manchon interne étant mobile en translation selon l'axe longitudinal de l'élément femelle et adapté pour entraîner la bague intermédiaire vers l'arrière lors de l'accouplement de l'élément femelle avec l'élément mâle sous l'action de l'élément mâle lors de son insertion, l'entraînement de la bague intermédiaire étant réalisé par au moins une bille d'entraînement mobile en translation dans une lumière d'une paroi du corps et faisant saillie de part et d'autre de cette paroi de manière que, lors de la translation vers l'arrière du manchon interne, un côté de la bille est en contact avec un épaulement du manchon interne tandis qu'un autre côté de la bille est en contact avec un épaulement de la bague intermédiaire.
- L'élément femelle comprend un manchon interne monté dans le conduit de circulation de fluide, le manchon interne étant mobile en translation selon l'axe longitudinal de l'élément femelle et adapté pour entraîner la bague intermédiaire vers l'arrière lors de l'accouplement de l'élément femelle avec l'élément mâle sous l'action de l'élément mâle lors de son insertion, l'entraînement de la bague intermédiaire étant réalisé par une partie du manchon interne, s'étendant radialement à travers un espace du corps de l'élément femelle et apte à exercer une force axiale sur un épaulement de la bague intermédiaire.
- L'organe de manoeuvre est une bague extérieure de manoeuvre mobile par rapport au corps entre une première position avant et une seconde position arrière, dans laquelle elle est apte à être verrouillée, lors de la manoeuvre de désaccouplement, alors que l'élément femelle de raccord rapide comprend des moyens de verrouillage en position arrière de la bague intermédiaire en configuration accouplée du raccord, alors que le verrouillage en position arrière de la bague extérieure de manoeuvre déclenche le déverrouillage de la bague intermédiaire vers sa position avant lors de la manoeuvre désaccouplement du raccord et alors que l'élément femelle comprend un ressort apte à repousser la bague intermédiaire vers sa position avant.
- Lorsque la bague extérieure de manoeuvre est manoeuvrée jusqu'à sa position arrière, des billes de verrouillage situées dans des logements du corps s'escamotent partiellement à l'extérieur du corps pour maintenir la bague extérieure de manoeuvre verrouillée dans sa position arrière lors de la manoeuvre de désaccouplement du raccord.
- Le déverrouillage de la bague de manoeuvre est déclenché par l'arrivée de la bague intermédiaire dans sa position arrière, alors que l'élément femelle comprend un ressort apte à repousser la bague de manoeuvre vers sa première position.
- La ou les billes de verrouillage en position arrière de la bague extérieure de manoeuvre forment également les moyens de verrouillage en position arrière de la bague intermédiaire.
- L'organe de manoeuvre est un coulisseau mobile selon un axe perpendiculaire à l'axe longitudinal de l'élément femelle et mobile entre une première position rentrée, où la bague intermédiaire est maintenue verrouillée en position arrière à l'aide de moyens de verrouillage tels qu'un doigt du coulisseau faisant saillie contre un épaulement de la bague intermédiaire, et une seconde position sortie, où la bague intermédiaire n'est plus maintenue verrouillée en position arrière, lors de la manoeuvre de désaccouplement du raccord.
- L'élément femelle comprend des billes de guidage de l'élément mâle, adaptées pour faire saillie radialement dans le canal d'insertion et montées dans des logements ménagés dans une paroi du corps de l'élément femelle.
- Les logements dans lesquels les billes de guidage sont montées sont délimités par une surface interne de la bague intermédiaire de verrouillage, alors que dans son mouvement vers sa position avant, la bague intermédiaire de verrouillage libère les billes de guidage de manière qu'elles puissent être repoussées dans une gorge de la bague intermédiaire de verrouillage et ne plus faire saillie dans le canal d'insertion.
- Les logements dans lesquels les billes de guidage sont montées sont délimités par une paroi de la bague extérieure de manoeuvre, alors que, dans son mouvement vers sa position arrière, la bague extérieure de manoeuvre libère les billes de guidage de manière qu'elles puissent être repoussées dans leurs logements et ne plus faire saillie dans le canal d'insertion.
- La paroi interne de la bague intermédiaire, délimitant les logements des billes de verrouillage, présente une surface tronconique divergente vers l'arrière de l'élément femelle.

L'invention concerne également un raccord rapide pour la jonction amovible de deux canalisations de fluide sous pression, ce raccord comprenant deux éléments respectivement mâle et femelle, aptes à s'emmancher l'un dans l'autre. Ce raccord est caractérisé en ce que l'élément femelle est tel que mentionné ci-dessus.

L'invention sera mieux comprise et d'autres avantages de celle-ci apparaîtront plus clairement à la lumière de la description qui va suivre de trois modes de réalisation d'un élément femelle de raccord et d'un raccord conformes à son principe, donnée uniquement à titre d'exemple et faite en référence aux dessins annexés dans lesquels :
- la figure 1 est une vue en perspective d'un raccord conforme à l'invention incorporant un élément femelle conforme à l'invention et un élément mâle aligné avec l'élément femelle sans être engagé dans celui-ci,
- la figure 2 est une coupe, selon un plan médian longitudinal, du raccord de la figure 1, dans une configuration désaccouplée,
- la figure 3 est vue similaire à la figure 2, l'élément mâle étant engagé dans l'élément femelle,
- la figure 4 est une vue similaire aux figures 2 et 3, l'élément mâle étant verrouillé dans l'élément femelle,
- la figure 5 est une vue similaire aux figures 2 à 4, une bague extérieure de manoeuvre de l'élément femelle étant manoeuvrée pour initier une phase de désaccouplement,
- la figure 6 est une vue à plus grande échelle du détail VI à la figure 4,
- la figure 7 est une vue similaire à la figure 2, pour un second mode de réalisation d'un élément de femelle de raccord rapide conforme à l'invention, un élément mâle de raccord rapide étant représenté en configuration désaccouplée,
- la figure 8 est une vue similaire à la figure 7, mais à plus grande échelle, dans une configuration verrouillée de l'élément mâle dans l'élément femelle,
- la figure 9 est une vue d'un organe de manoeuvre d'un élément femelle de raccord rapide conforme au troisième mode de réalisation de l'invention, dans une configuration de déverrouillage,
- la figure 10 est une vue similaire à la figure 9, l'organe de manoeuvre étant représenté en configuration de verrouillage.

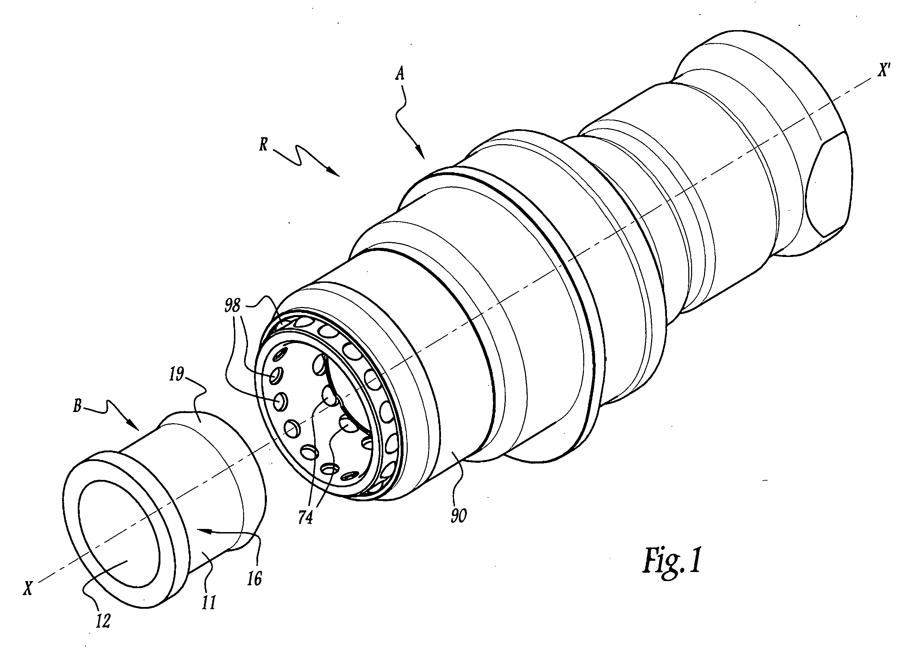

Le raccord rapide R représenté sur les figures 1 à 6 comprend un élément femelle A et un élément ou embout mâle B prévus pour s'emmancher l'un dans l'autre dans la direction d'un axe X-X' qui est, en pratique, un axe longitudinal commun aux éléments A et B.

Par convention, on considère que la partie avant d'un élément A ou B est la partie de cet élément tournée vers l'autre élément lors de leur connexion.

Dans la présente description, les termes « axial », « radial », « axialement », « radialement » font référence à l'axe X-X'. Une direction est « axiale » quand elle est parallèle à l'axe X-X', et « radiale » quand elle est perpendiculaire à l'axe X-X' et sécante avec cet axe. Une surface est axiale quand elle est perpendiculaire à l'axe X-X', et radiale quand cette surface appartient à un cylindre qui entoure l'axe X-X' à une distance radiale constante.

L'élément mâle B comprend un corps tubulaire 11 qui définit un canal 12 de circulation de fluide sous pression. Sur sa surface périphérique externe 16, du côté d'un bord avant 17, l'élément mâle B est pourvu d'une collerette 19 dont le profil est défini par une surface tronconique avant 19a et une surface tronconique arrière 19b. La surface tronconique 19a suit un profil de cône dont le sommet est situé du côté avant de l'élément mâle B, tandis que la surface tronconique 19b suit un profil de cône dont le sommet est situé du côté arrière de l'élément mâle B.

L'élément femelle A comprend un corps principal 40. La partie avant du corps 40 comprend un canal d'insertion 42 délimité par une paroi tubulaire 44 centrée autour de l'axe X-X'. Le corps 40 se prolonge vers l'arrière par une chambre centrale 46 reliée au canal d'insertion 42 par un alésage 48. La chambre centrale 46 est enfin reliée à un canal arrière 50, dans lequel une canalisation de fluide est destinée à être connectée, par un alésage 52.

Ainsi, le canal d'insertion 42, l'alésage 48, la chambre centrale 46, l'alésage 52 et le canal arrière 50 définissent ensemble un conduit 400 de circulation de fluide sous pression à l'intérieur de l'élément femelle de raccord A.

A l'intérieur du conduit 400 de circulation de fluide, un manchon interne 60 est monté coulissant selon l'axe X-X'. Le manchon interne 60 constitue un clapet et a une forme globalement tubulaire, comprenant une partie avant 602, une partie centrale 604 et une partie arrière 606. La partie avant 602 est adaptée pour coulisser dans l'alésage 48, la partie centrale 604 est adaptée pour coulisser dans la chambre centrale 46, et la partie arrière 606 est adaptée pour coulisser dans l'alésage 52.

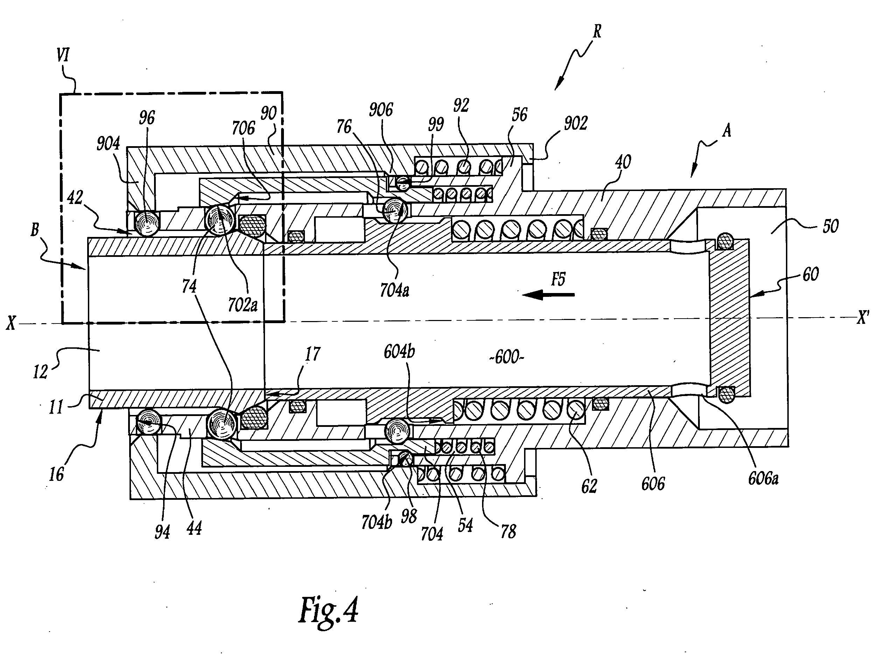

Le manchon interne 60 est creux et son volume interne 600 est ouvert du côté avant dans le canal d'insertion 42. Du côté arrière, le manchon interne 60 comporte un fond 608. La partie arrière 606 comprend, au voisinage du fond 608, des orifices 606a répartis avantageusement sur la circonférence de la partie arrière 606, et permettant le passage de fluide entre le volume 600 et le canal arrière 50, quand le manchon interne 60 est dans sa position arrière, représentée à la figure 4.

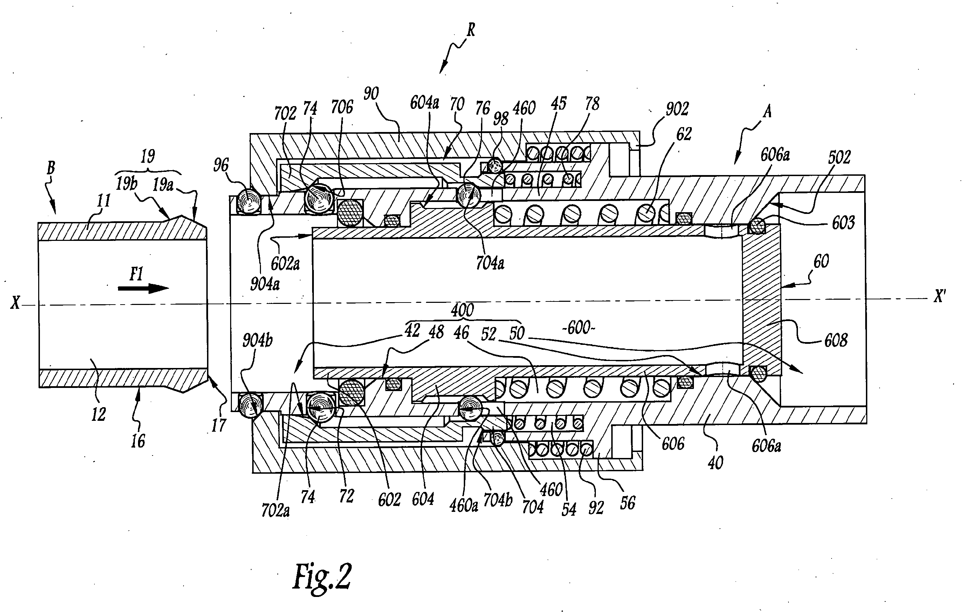

Le manchon interne 60 est mobile en translation entre une position avant représentée à la figure 2 et une position arrière représentée à la figure 4. Le manchon interne 60 est repoussé vers sa position avant par un ressort 62 logé dans la chambre centrale 46.

L'élément femelle A comporte également une bague intermédiaire de verrouillage 70. La bague intermédiaire 70 est mobile en translation, par rapport au corps 40, selon l'axe X-X'. La bague intermédiaire 70 est apte à coulisser en étant plus ou moins engagée dans un logement annulaire 54 du corps 40.

Une partie avant 702 de la bague intermédiaire 70 définit, avec la surface radiale externe de la paroi tubulaire 44 du corps 40, des logements radiaux 72 pour une rangée de billes de verrouillage 74. Les billes de verrouillage 74 sont aptes à faire saillie radialement dans le canal d'insertion 42 pour verrouiller l'élément mâle B en configuration accouplée avec l'élément femelle A, dans la configuration représentée à la figure 4. La partie avant 702 de la bague 70 présente une surface cylindrique interne 702a apte à entrer en contact avec les billes 74. Dans la configuration accouplée, les billes de verrouillage 74 sont maintenues en contact avec la surface cylindrique 702a dans une position où elles émergent de la paroi tubulaire 44 dans le canal d'insertion 42.

L'élément femelle A comporte des moyens d'entraînement en translation vers l'arrière de la bague intermédiaire 70 par le manchon interne 60. Ces moyens d'entraînement comprennent une rangée de billes d'entraînement, dont uniquement deux sont visibles aux figures 2 à 5 avec la référence 76, mobiles en translation selon l'axe X-X' dans des lumières 460 d'une paroi 45 du corps 40 délimitant la chambre centrale 46, radialement sur l'extérieur. Les billes d'entraînement 76 font saillie radialement de part et d'autre de la paroi 45 de la chambre centrale 46.

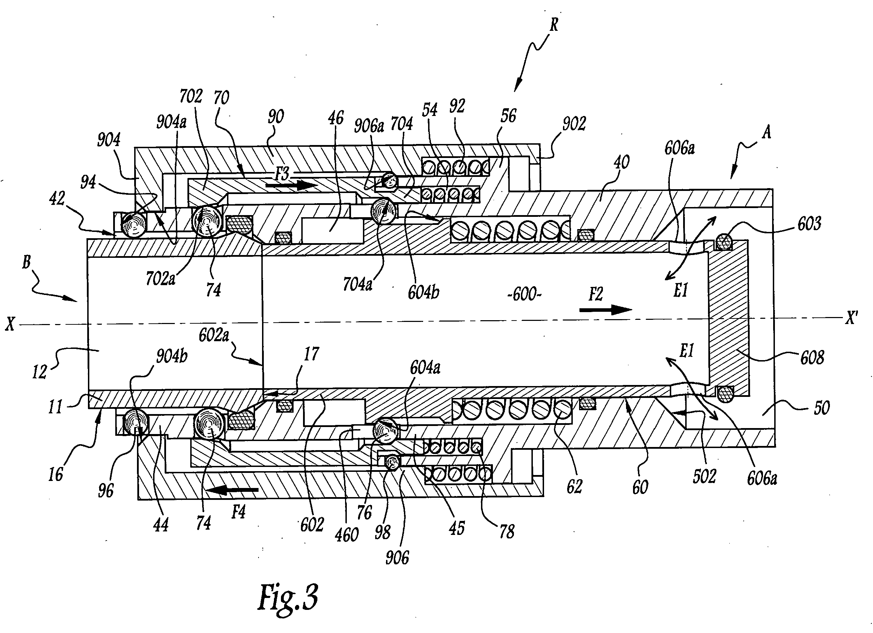

Dans la configuration de la figure 3, dans laquelle le manchon central 60 entraîne en translation vers l'arrière la bague intermédiaire 70, les billes 76 sont en contact, du côté interne des lumières 460, avec un épaulement 604a de la partie centrale 604 du manchon interne 60 et, du côté externe des lumières 460, avec un épaulement 704a d'une partie arrière 704 de la bague intermédiaire 70.

La bague intermédiaire 70 est repoussée vers une position avant représentée à la figure 2 par un ressort 78 logé dans le logement annulaire 54. Dans sa position avant, la bague intermédiaire 70 est en butée par rapport au corps 40, l'épaulement 704a étant en contact avec les billes d'entraînement 76, qui sont elles-mêmes en butée contre un bord avant 460a des lumières 460.

L'élément femelle A est équipée d'un organe de manoeuvre mobile en translation selon un axe longitudinal entre une première position, dans laquelle l'élément mâle B est verrouillé dans l'élément femelle A, et une seconde position dans laquelle les éléments mâle et femelle sont désaccouplés, lors d'une manoeuvre de désaccouplement de l'élément mâle B de l'élément femelle A. Dans le mode de réalisation des figures 1 à 6, cet organe de manoeuvre est une bague extérieure de manoeuvre 90 mobile en translation par rapport au corps 40 selon l'axe X-X'. La bague de manoeuvre 90 est actionnable manuellement par un opérateur vers sa seconde position pour désaccoupler l'élément femelle A et l'élément mâle B. La bague extérieure de manoeuvre 90 est repoussée, par un ressort 92, vers une position avant représentée à la figure 4, correspondant à sa première position. Dans cette position, une collerette arrière 902 de la bague 90 est en contact avec une collerette externe 56 du corps 40, formant butée, cette collerette 56 servant également d'appui au ressort 92.

La bague de manoeuvre 90 comporte une paroi avant 904 qui s'étend perpendiculairement à l'axe X-X' en direction de la paroi tubulaire 44. Une surface interne 904a de la paroi avant 904 définit, avec la paroi tubulaire 44, des logements 94 pour une rangée de billes de guidage 96. Les billes de guidage 96 sont adaptées pour faire saillie dans le canal d'insertion 42 de manière à guider la surface périphérique externe 16 de l'élément mâle B. Les billes de guidage 96 ont également pour fonction de limiter le rotulage de l'élément mâle B autour de la rangée de billes de verrouillage 74, c'est-à-dire un mouvement de basculement autour d'un axe perpendiculaire à l'axe X-X' qui entraînerait une perte d'étanchéité de la jonction des deux canalisations.

L'élément femelle A comporte des moyens de verrouillage de la bague intermédiaire 70 adaptés pour maintenir la bague intérieure 70 en position arrière lors de la phase d'accouplement. Ces moyens de verrouillage comprennent une rangée de billes de verrouillage, dont uniquement deux sont représentées aux figures 2 à 5, 7 et 8 avec la référence 98, située dans des logements 99 du corps 40. Les billes de verrouillage 98 sont aptes à faire saillie, par rapport aux logements 99, dans le logement annulaire 54 de manière à servir de butée à un épaulement 704b de la bague 70, situé sur un côté externe de la partie arrière 704 par rapport à l'épaulement 704a. L'épaulement 704b est orienté vers l'avant de l'élément femelle A, de manière que le mouvement vers l'avant de la bague 70 sous l'effet du ressort 78 soit empêché lorsque cet épaulement porte contre les billes 98. Dans cette configuration représentée à la figure 4, les billes de verrouillage 98 font saillie dans le logement annulaire 54 sous l'action d'une partie interne protubérante 906 de la bague extérieure de manoeuvre 90, qui repousse les billes de verrouillage 98 en direction de l'axe X-X'.

L'élément femelle A comporte également des moyens de verrouillage de la bague de manoeuvre extérieure 90 dans une position arrière représentée aux figures 2, 3 et 5, correspondant à la seconde position de l'organe de manoeuvre, en configuration désaccouplée. Ces moyens comprennent les billes de verrouillage 98 de la bague intermédiaire en position arrière. Comme cela est visible dans la configuration de la figure 2, les billes de verrouillage 98 sont aptes à faire saillie de manière à entrer en contact avec un épaulement 906a de la partie interne protubérante 906, sous l'action de la partie arrière 704 de la bague 70, qui repousse les billes de verrouillage 98 radialement à l'opposé de l'axe X-X'. L'épaulement 906a est orienté vers l'avant de l'élément femelle A, de manière que le mouvement vers l'avant de la bague extérieure de manoeuvre 90 sous l'action du ressort 92 soit empêché lorsque la bague 90 porte contre les billes 98.

Le fonctionnement du raccord R est le suivant : la configuration désaccouplée du raccord R est représentée à la figure 2. Dans cette configuration, la bague extérieure de manoeuvre 90 est verrouillée en position arrière par les billes de verrouillage 98. La bague intermédiaire 70 est repoussée en position avant par le ressort 78, tandis que le manchon interne 60 est repoussé en position avant par le ressort 62. Dans cette configuration, le passage de fluide du canal arrière 50 vers le volume interne 600 à travers les orifices 606a est empêché par l'alésage 52 et par un joint 603 monté dans le manchon interne 60 et qui exerce un contact étanche contre un siège 502 du canal arrière 50. La coopération des orifices 606a, de l'alésage 52 et du joint 603 forme une soupape d'étanchéité.

Dans cette configuration, les billes de verrouillage 74 sont libres, de manière que, lorsque l'élément mâle B est inséré dans le canal d'insertion 42, les billes de verrouillage 74 sont repoussées à l'opposé de l'axe X-X' sous l'action de la collerette 19. Dans cette configuration, la bague intermédiaire 70 forme des logements 706 dans lesquels les billes de verrouillage 74 sont repoussées lors de la manoeuvre d'accouplement.

L'insertion de l'élément mâle B selon la flèche F1 à la figure 2 se poursuit de manière que le bord avant 17 de l'élément mâle B vienne en contact d'un bord avant 602a de la partie avant 602 du manchon interne 60, comme cela est visible à la figure 3. Lorsque le contact s'établit, le manchon interne 60 est repoussé selon la flèche F2 à la figure 3, vers l'arrière de l'élément femelle A à l'encontre de la force du ressort 62.

Lorsque l'élément mâle B est inséré dans le canal d'insertion 42, les billes de guidage 96 sont repoussées vers l'extérieur par la collerette 19 dans un espace délimité par un chanfrein 904b bordant la surface 904a. Une fois que la collerette 19 a dépassé les billes de guidage 96, les billes de guidage 96 viennent faire saillie dans le canal d'insertion 42 contre la surface périphérique externe 16 de l'élément mâle B. Lorsque le mouvement selon la flèche F1 de l'élément mâle B se poursuit, les billes de verrouillage 74 sont repoussées dans les logements 706 par la surface avant 19a de la collerette 19.

Lorsque le mouvement vers l'arrière selon la flèche F2 du manchon interne 60 débute, la partie centrale 604 se déplace jusqu'à ce que l'épaulement 604a vienne en contact avec les billes d'entrainement 76. La bague intermédiaire 70 est alors entrainée dans un mouvement vers l'arrière selon la flèche F3 à la figure 3, par les billes d'entrainement 76. Lors de ce mouvement, la surface 702a de la partie avant 702 repousse les billes de verrouillage 74 en direction de l'axe X-X' contre la surface périphérique externe 16, ce qui verrouille l'élément mâle B dans l'élément femelle A.

Lors du mouvement vers l'arrière selon la flèche F2 du manchon interne 60, le joint 603 est éloigné du siège 502 et les orifices 606a débouchent dans le canal arrière 50, ce qui rend possible un écoulement E1 de fluide entre le volume interne 600 et le canal arrière 50, ou vice versa.

Dans la configuration de la figure 3, la bague intermédiaire 70 est en butée dans sa position arrière. Elle ne repousse donc plus les billes de verrouillage 98 vers l'extérieur. Cela a pour effet de libérer le mouvement de la bague extérieure de manoeuvre 90 vers l'avant selon la flèche F4 sous l'effet du ressort 92. Lors du mouvement selon la flèche F4, la partie interne protubérante 906 repousse les billes de verrouillage 98 en direction de l'axe X-X' de manière qu'elles fassent saillie dans le logement annulaire 54, comme cela est représenté à la figure 4. Lorsque la bague 90 arrive en butée contre la colerette 56, les billes de verrouillage 98 verrouillent la bague intermédiaire 70 dans sa position arrière.

Le verrouillage en position arrière de la bague intermédiaire de verrouillage 70 nécessite une surcourse du manchon interne 60 par rapport à sa position dans la configuration accouplé du raccord R. De ce fait, lorsque l'entraînement vers l'arrière de la bague intermédiaire 70 par les billes d'entrainement 76 est terminé, le manchon interne 60 effectue un mouvement de retour vers l'avant selon la flèche F5 sous l'action du ressort 62. Ce mouvement a pour effet de repousser l'élément mâle B vers l'arrière de manière que la surface arrière 19b de la collerette 19 entre en contact avec les billes de verrouillage 74, qui sont, dans cette configuration, repoussées dans le canal d'insertion 42 par la bague intermédiaire 70, elle-même verrouillée en position arrière. Dans cette configuration, l'accouplement de l'élément mâle B dans l'élément femelle A est terminé et les éléments femelles A et mâles B du raccord sont verrouillés en configuration accouplée.

Le verrouillage est obtenu de façon automatique sans nécessiter d'intervention d'un opérateur autre que l'insertion de l'élément mâle B dans le canal d'insertion 42 de l'élément femelle A. La surcourse du manchon interne 60 nécessite que l'opérateur insère l'élément mâle jusqu'à qu'il ressente un déclic permettant d'identifier le verrouillage en position arrière de la bague intermédiaire 70 et qu'il observe l'arrivée en butée en position avant de la bague de manoeuvre 90. Cela améliore la fiabilité de la manoeuvre d'accouplement et assure à l'opérateur que le verrouillage est bien obtenu lorsqu'il relâche son action sur l'élément mâle B.

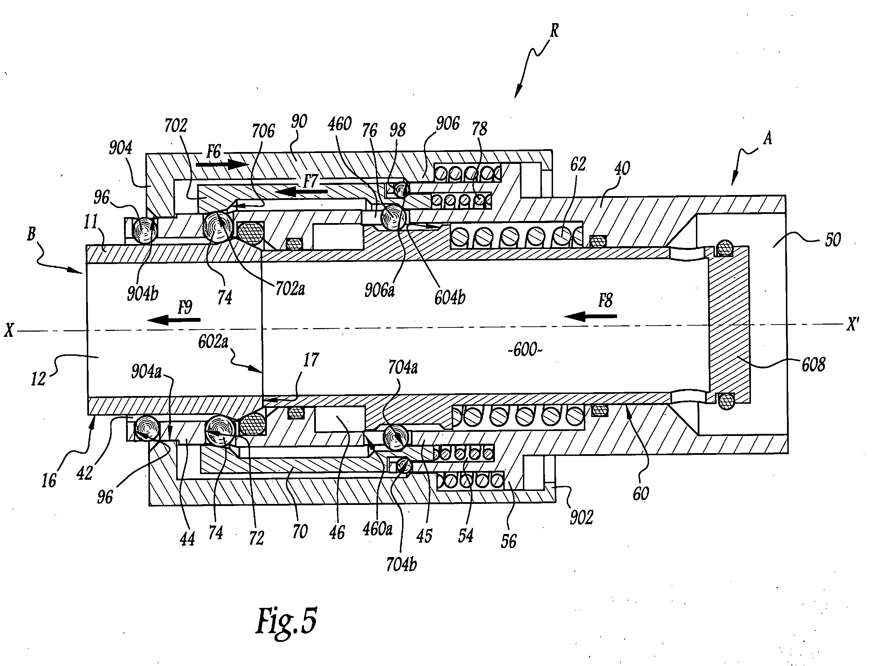

Pour désaccoupler le raccord R, la bague de manoeuvre 90 est dégagée manuellement par un opérateur vers sa position arrière selon la flèche F6 à la figure 5. Ce mouvement a pour effet que les billes de verrouillage 98 ne sont plus repoussées par la partie 906 contre l'épaulement 704b de la bague intermédiaire 70. Les billes de verrouillage 98 sont donc libres d'être repoussées vers l'extérieur par l'épaulement 704b sous l'effet du ressort 78. La bague intermédiaire de verrouillage 70 est alors repoussée vers l'avant, selon la flèche F7 à la figure 5.

Dans son mouvement vers l'avant, la bague intermédiaire 70 entraîne les billes d'entraînement 76 grâce à l'épaulement 704a.

Lorsque la bague intermédiaire de verrouillage 70 est repoussée vers l'avant, elle libère les billes de verrouillage 74 de telle manière qu'elles peuvent être repoussées à l'opposé de l'axe X-X' dans les logements 706 de la bague 70. Sous l'action du ressort 62, le manchon interne 60 effectue un mouvement vers l'avant selon la flèche F8. Ce mouvement est permis pour la translation vers l'avant des billes d'entraînement 76 qui ne font pas d'obstruction à la translation du manchon interne 60. Comme les billes de verrouillage 74 sont libres d'être repoussées dans les logements 706, le mouvement du manchon interne 60 entraîne un mouvement de retrait selon la flèche F9 de l'élément mâle B, vers l'arrière. La collerette 19 repousse les billes de verrouillage 74, puis les billes de guidage 96, qui peuvent être repoussées de l'axe X-X' grâce à la translation vers l'arrière de la bague de manoeuvre 90. A ce moment, la manoeuvre de désaccouplement est terminée. Le manchon interne 60 retourne dans sa position avant, dans laquelle les orifices 606a sont masqués par l'alésage 52 et le joint 603 repose contre le siège 502. Les billes d'entraînement 76 sont repoussées vers l'avant dans leur position de la figure 2, par un épaulement 604b du manchon interne 60.

Lors du mouvement de déverrouillage selon la flèche F7 de la bague intermédiaire 70, les billes de verrouillage 98 sont repoussées à l'opposé de l'axe X-X' de manière qu'elles verrouillent en position arrière la bague de manoeuvre 90, comme cela est le cas à la figure 2.

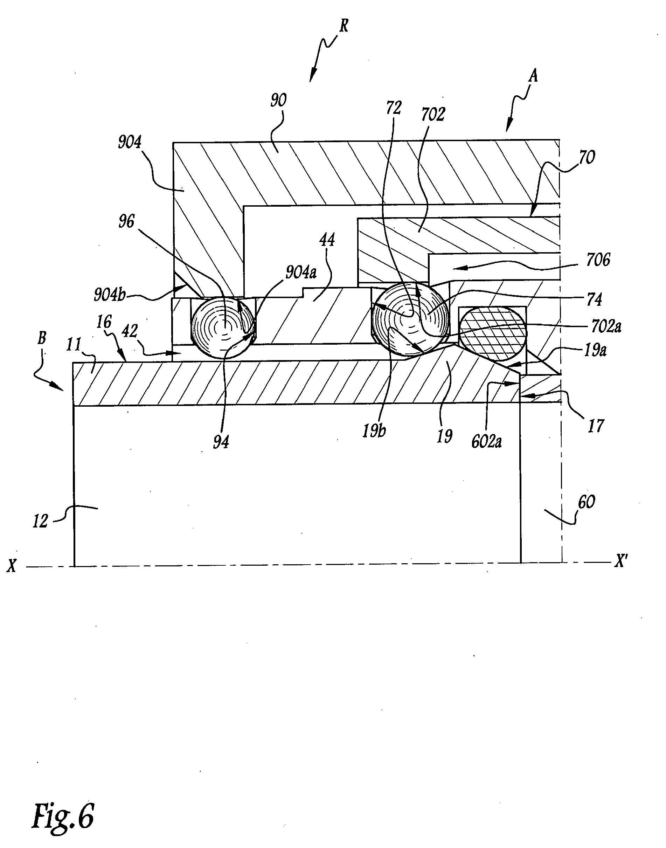

La surface 702a est avantageusement tronconique et ouverte vers l'arrière de l'élément femelle A, ce qui permet de faciliter la manoeuvre de désaccouplement. En variante représentée à la figure 6, la surface 702a est cylindrique et centrée autour de l'axe X-X'.

Dans la mesure où le mouvement de dégagement de l'élément mâle B s'effectue dans le même sens que le mouvement de déverrouillage de la bague intermédiaire de verrouillage 70, il n'y a pas de problème de coincement des billes de verrouillage 74 lors de la manoeuvre de désaccouplement. Les coûts de maintenance et de remplacement de pièces usées sont ainsi réduits. Le matage des composants du raccord dû au coincement est évité. Les manipulations du raccord par un opérateur sont plus rapides, plus ergonomiques et nécessitent des efforts de désaccouplement moins élevés.

Le dégagement de l'élément mâle B étant obtenu grâce à l'action du ressort 62 sur le manchon interne 60 et, le verrouillage du raccord R étant automatique, le raccord est manoeuvrable à une seule main par l'opérateur.

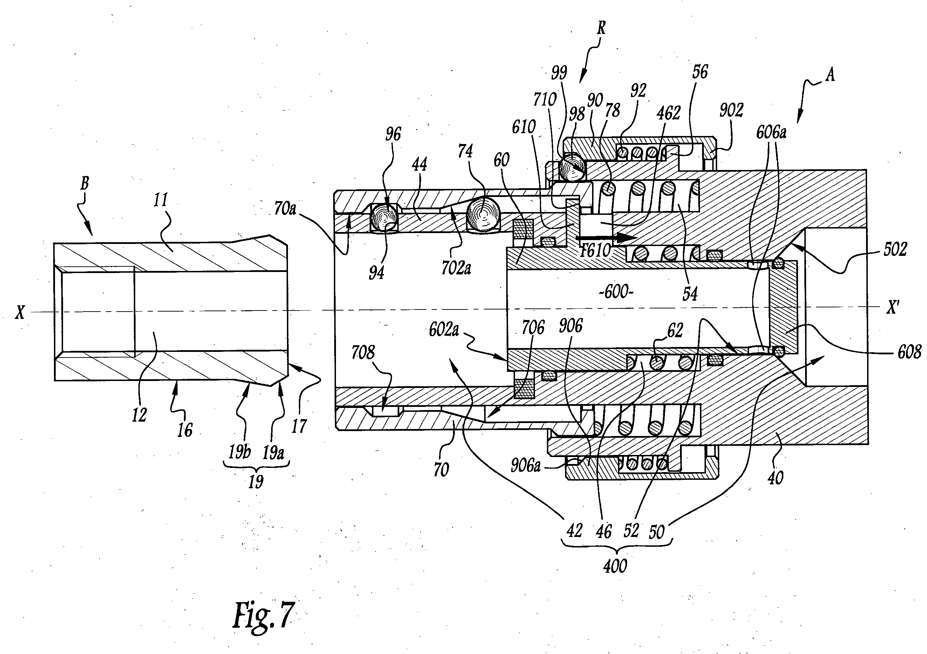

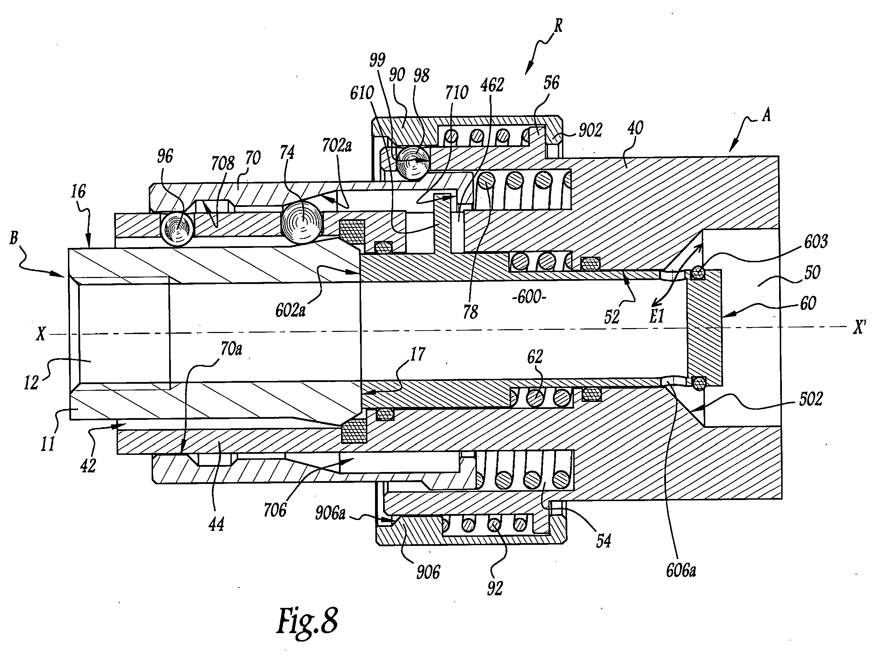

Un deuxième mode de réalisation de l'invention est représenté sur les figures 7 et 8. Dans ce mode de réalisation, les éléments communs au premier mode de réalisation portent les mêmes références et fonctionnent de la même manière. Seules les différences par rapport au mode de réalisation des figures 1 à 6 sont détaillées ci-après.

Dans ce mode de réalisation, les logements 94 sont délimités par une surface interne 70a de la bague intermédiaire 70. Les billes de guidage 96 sont aptes à être repoussées à l'opposé de l'axe X-X' dans une gorge périphérique 708 de la surface interne 70a. Dans ce cas, la bague intermédiaire 70 fait saillie à l'extérieur du corps 40. La bague extérieure de manoeuvre 90 a une dimension plus courte selon l'axe X-X' que dans le premier mode de réalisation et sa fonction se limite à commander le déverrouillage de la bague intermédiaire de verrouillage 70.

Dans ce mode de réalisation, l'entraînement en translation vers l'arrière de la bague intérieure 70 par le manchon interne 60 n'est pas réalisé par des billes d'entraînement mais par un doigt 610 du manchon interne 60, qui s'étend radialement à l'opposé de l'axe X-X' à travers un espace 462 du corps 40. L'espace 462 s'étend entre la chambre centrale 46 et le logement annulaire 54. A travers cet espace 462, le doigt 610 exerce une force axiale F610 dirigée vers l'arrière de l'élément femelle A sur un épaulement 710 situé à l'arrière de la bague intermédiaire 70. L'épaulement 70 est orienté vers l'avant de l'élément femelle A, de manière que, lors du mouvement vers l'arrière du manchon interne 60, la force axiale F610 exercée par le doigt 610 entraîne également la bague intermédiaire 70 vers l'arrière.

Cette structure alternative des moyens d'entraînement vers l'arrière de la bague intermédiaire 70 par le manchon interne 60 peut être appliquée au mode de réalisation des figures 1 à 6.

Selon un mode de réalisation non représenté de l'invention, l'entraînement en translation de la bague intermédiaire de verrouillage 70 peut également être réalisé par une clavette ou toute autre pièce en saillie adaptée pour transmettre un effort axial F610 à la bague intermédiaire 70 lors du mouvement vers l'arrière du manchon interne 60.

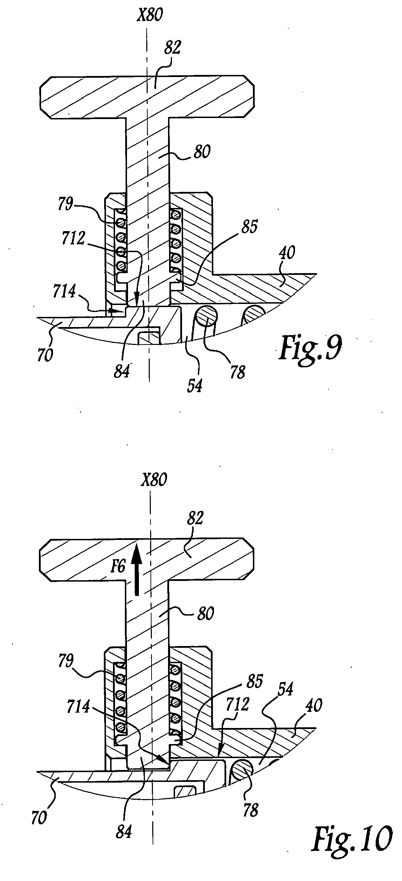

Un troisième mode de réalisation de l'invention est représenté aux figures 9 et 10. Dans ce mode de réalisation, l'organe de manoeuvre de l'élément femelle A n'est pas une bague extérieure de manoeuvre 90 mais un coulisseau 80 monté dans un logement cylindrique du corps 40. Le coulisseau 80 est adapté pour coulisser selon un axe X80 radial par rapport à l'axe X-X'. Le coulisseau 80 porte une partie de commande 82, qui peut prendre la forme d'un bouton poussoir ou d'une poignée qui fait saillie à l'extérieur du corps 40. A son extrémité opposée à la partie de commande 82, le coulisseau 80 comporte un doigt de verrouillage 84. Dans la configuration de la figure 9, le coulisseau 80 est repoussé par une surface radiale externe 712 de la bague intermédiaire 70 vers une position sortie correspondant à la seconde position de l'organe de manoeuvre, qui correspond également à la position arrière de la bague de manoeuvre 90. Dans cette position sortie, le coulisseau 80 est verrouillé à l'encontre de l'action d'un ressort 79, qui exerce une force selon l'axe X80 qui tend à repousser le coulisseau 80 vers une position rentrée correspondant à la première position de l'organe de manoeuvre, qui correspond également à la position avant de la bague extérieure de manoeuvre 90, représentée à la figure 10. Le ressort 79 s'appuie contre une nervure 85 du coulisseau 80.

Lors de l'accouplement de l'élément mâle B dans l'élément femelle A, la cinématique du raccord R fait intervenir un mouvement vers l'arrière de la bague intermédiaire de verrouillage 70. Lorsque ce mouvement intervient, le coulisseau 80 n'est plus repoussé vers sa position sortie par la surface 712 de la bague 70. En conséquence, le coulisseau 80 est repoussé dans sa position rentrée par le ressort 79. Dans cette configuration, la bague intermédiaire de verrouillage 70 est verrouillée en position arrière par le doigt de verrouillage 84, qui fait saillie dans le logement annulaire 54 et forme une butée. La bague intermédiaire de verrouillage 70 comporte un épaulement 714 orienté vers l'avant de l'élément femelle A. Dans la position rentrée du coulisseau 80, l'appui de l'épaulement 714 contre le doigt de verrouillage 84 empêche le mouvement vers l'avant de la bague intermédiaire 70 sous l'action du ressort 78.

Pour déverrouiller la bague intermédiaire 70 et désaccoupler les éléments mâle B et femelle A, le coulisseau 80 est tiré vers le haut selon la flèche F6 à la figure 10. La bague 70 est déverrouillée et le cinématique de désaccouplement se déroule de la même façon que dans les modes de réalisation des figures 1 à 8.

Les caractéristiques de ce mode de réalisation peuvent être appliquées aux deux premiers modes de réalisation de l'invention.

## Revendications

1. Elément femelle (A) de raccord rapide (R) pour la jonction amovible de deux canalisations de fluide sous pression, cet élément femelle (A) étant apte à recevoir en emmanchement, selon un axe longitudinal (X-X') de cet élément femelle (A) et dans un canal d'insertion (42) situé d'un côté avant de l'élément femelle (A), un élément mâle (B) de raccord, cet élément femelle (A) comprenant :
- un corps (40) traversé par un conduit de circulation de fluide (400),
- des billes (74) de verrouillage de l'élément mâle (B) dans une configuration accouplée, ces billes de verrouillage (74) étant positionnées dans des logements (72) radiaux du corps (40) et aptes à faire saillie radialement dans le canal d'insertion (42),
- un organe de manoeuvre (90 ; 80) mobile en translation selon un axe longitudinal (X-X' ; X80) entre une première position, dans laquelle l'élément mâle (B) est verrouillé dans l'élément femelle (A) en configuration accouplée, et une seconde position, dans laquelle les éléments mâle (B) et femelle (A) sont en configuration désaccouplée, lors d'une manoeuvre de désaccouplement de l'élément mâle (B) et de l'élément femelle (A), et
- une bague intermédiaire de verrouillage (70), mobile en translation axiale entre une position arrière dans laquelle une paroi interne (702a) de la bague intermédiaire (70) maintient les billes de verrouillage (74) en saillie dans le canal d'insertion (42) en configuration accouplée du raccord (R), et une position avant du côté avant de l'élément femelle (A) dans laquelle les billes de verrouillage (74) sont libres d'être repoussées à l'opposé de l'axe longitudinal (X-X') de l'élément femelle (A) pour ne plus faire saillie dans le canal d'insertion (42), sous l'action de l'organe de manoeuvre (90 ; 80) lors de la manoeuvre de désaccouplement,
cet élément femelle étant **caractérisé en ce qu'**il comprend des moyens (98 ; 94) de verrouillage en position arrière de la bague intermédiaire (70) en configuration accouplée du raccord (R) et **en ce que** le déverrouillage de la bague intermédiaire (70) vers sa position avant est déclenché par le dégagement (F6) de l'organe de manoeuvre (90 ; 80) vers sa seconde position.

2. Elément femelle de raccord rapide selon la revendication1, **caractérisé en ce qu'**il comprend un manchon interne (60) monté dans le conduit (400) de circulation de fluide, le manchon interne (60) étant mobile en translation selon l'axe longitudinal (X-X') de l'élément femelle (A) et adapté pour entraîner la bague intermédiaire (70) vers l'arrière lors de l'accouplement de l'élément femelle (A) avec l'élément mâle (B) sous l'action de l'élément mâle (B) lors de son insertion, l'entraînement de la bague intermédiaire (70) étant réalisé par au moins une bille d'entraînement (76) mobile en translation dans une lumière (460) d'une paroi (45) du corps (40) et faisant saillie de part et d'autre de cette paroi (45) de manière que, lors de la translation vers l'arrière du manchon interne (60), un côté de la bille (76) est en contact avec un épaulement (604) du manchon interne (60) tandis qu'un autre côté de la bille (76) est en contact avec un épaulement (704a) de la bague intermédiaire (70).

3. Elément femelle de raccord rapide selon la revendication 1, **caractérisé en ce qu'**il comprend un manchon interne (60) monté dans le conduit (400) de circulation de fluide, le manchon interne (60) étant mobile en translation selon l'axe longitudinal (X-X') de l'élément femelle (A) et adapté pour entraîner la bague intermédiaire (70) vers l'arrière lors de l'accouplement de l'élément femelle (A) avec l'élément mâle (B) sous l'action de l'élément mâle (B) lors de son insertion, l'entraînement de la bague intermédiaire (70) étant réalisé par une partie (610) du manchon interne (60), s'étendant radialement à travers un espace (462) du corps de l'élément femelle (A) et apte à exercer une force axiale (F610) sur un épaulement (710) de la bague intermédiaire (70).

4. Elément femelle de raccord rapide selon l'une des revendications précédentes, **caractérisé en ce que** l'organe de manoeuvre est une bague extérieure de manoeuvre (90) mobile par rapport au corps (40) entre une première position avant et une seconde position arrière, dans laquelle elle est apte à être verrouillée, lors de la manoeuvre de désaccouplement, **en ce que** l'élément femelle (A) de raccord rapide (R) comprend des moyens (98) de verrouillage en position arrière de la bague intermédiaire (70) en configuration accouplée du raccord (R), **en ce que** le verrouillage en position arrière de la bague extérieure de manoeuvre (90) déclenche le déverrouillage de la bague intermédiaire (70) vers sa position avant lors de la manoeuvre désaccouplement du raccord (R) et **en ce que** l'élément femelle (A) comprend un ressort (78) apte à repousser la bague intermédiaire (70) vers sa position avant.

5. Elément femelle de raccord rapide selon la revendication 4, **caractérisé en ce que** lorsque la bague extérieure de manoeuvre (90), est manoeuvrée jusqu'à sa position arrière, des billes (98) de verrouillage situées dans des logements (99) du corps (40) s'escamotent partiellement à l'extérieur du corps (40) pour maintenir la bague extérieure de manoeuvre (90) verrouillée dans sa position arrière lors de la manoeuvre de désaccouplement du raccord (R).

6. Elément femelle de raccord rapide selon la revendication 5, **caractérisé en ce que** le déverrouillage de la bague de manoeuvre (90) est déclenché par l'arrivée de la bague intermédiaire (70) dans sa position arrière et **en ce que** l'élément femelle (A) comprend un ressort (92) apte à repousser la bague de manoeuvre (90) vers sa première position.

7. Elément femelle de raccord rapide selon la revendication 5, **caractérisé en ce que** la ou les billes (98) de verrouillage en position arrière de la bague extérieure de manoeuvre (90) forment également les moyens de verrouillage en position arrière de la bague intermédiaire (70).

8. Elément femelle de raccord rapide selon l'une des revendications 1 à 3, **caractérisé en ce que** l'organe de manoeuvre est un coulisseau (80) mobile selon un axe (X80) perpendiculaire à l'axe longitudinal (X-X') de l'élément femelle (A) et mobile entre une première position rentrée, où la bague intermédiaire (70) est maintenue verrouillée en position arrière à l'aide de moyens de verrouillage tels qu'un doigt (84) du coulisseau (80) faisant saillie contre un épaulement (714) de la bague intermédiaire (70), et une seconde position sortie, où la bague intermédiaire (70) n'est plus maintenue verrouillée en position arrière, lors de la manoeuvre de désaccouplement du raccord (R).

9. Elément femelle de raccord rapide selon l'une des revendications précédentes, **caractérisé en ce qu'**il comprend des billes de guidage (96) de l'élément mâle (B), adaptées pour faire saillie radialement dans le canal d'insertion (42) et montées dans des logements (94) ménagés dans une paroi (44) du corps (40) de l'élément femelle (A).

10. Elément femelle de raccord rapide selon la revendication 9, **caractérisé en ce que** les logements (94) dans lesquels les billes de guidage (96) sont montées sont délimités par une surface interne (70a) de la bague intermédiaire de verrouillage (70) et **en ce que** dans son mouvement vers sa position avant, la bague intermédiaire de verrouillage (70) libère les billes de guidage (96) de manière qu'elles puissent être repoussées dans une gorge (708) de la bague intermédiaire de verrouillage (70) et ne plus faire saillie dans le canal d'insertion (42).

11. Elément femelle de raccord rapide selon les revendications 4 et 9, **caractérisé en ce que** les logements (94) dans lesquels les billes de guidage (96) sont montées sont délimités par une paroi (904) de la bague extérieure de manoeuvre (90) et **en ce que**, dans son mouvement vers sa position arrière, la bague extérieure de manoeuvre (90) libère les billes de guidage (96) de manière qu'elles puissent être repoussées dans leurs logements (94) et ne plus faire saillie dans le canal d'insertion (42).

12. Elément femelle de raccord rapide selon l'une des revendications précédentes, **caractérisé en ce que** la paroi interne (702) de la bague intermédiaire (70), délimitant les logements (72) des billes de verrouillage (76), présente une surface tronconique (702a) divergente vers l'arrière de l'élément femelle (A).

13. Raccord rapide (R) pour la jonction amovible de deux canalisations de fluide sous pression, ce raccord (R) comprenant deux éléments respectivement mâle (B) et femelle (A), aptes à s'emmancher l'un dans l'autre, **caractérisé en ce que** l'élément femelle (A) est selon l'une des revendications 1 à 12.

## Patentansprüche

1. Aufnahmeteil (A) einer Schnellkupplung (R) für die lösbare Verbindung zweier Druckmittelleitungen, wobei ein Einsteckteil (B) der Kupplung entlang einer Längsachse (X-X') des Aufnahmeteils (A) in einen an einer Vorderseite des Aufnahmeteils (A) angeordneten Einführkanal (42) eingesteckt werden kann, wobei das Aufnahmeteil (A) Folgendes umfasst:
- einen Körper (40), der von einem Fluidzirkulationskanal (400) durchgriffen ist,
- Rastkugeln (74) zum Verrasten des Einsteckteils (B) in einem gekuppelten Zustand, wobei die Rastkugeln (74) in radialen Aufnahmen (72) des Körpers (40) angeordnet sind und radial in den Einführkanal (42) hineinragen können,
- ein Bedienelement (90; 80), das bei einem Entkupplungsvorgang des Einsteckteils (B) und des Aufnahmeteils (A) entlang einer Längsachse (X-X'; X80) zwischen einer ersten Stellung, in der das Einsteckteil (B) im gekuppelten Zustand in dem Aufnahmeteil (A) verrastet ist, und einer zweiten Stellung, in der das Einsteckteil (B) und das Aufnahmeteil (A) im entkuppelten Zustand sind, verschiebbar ist, und
einen Rastzwischenring (70), der bei dem Entkupplungsvorgang unter Betätigung des Bedienelements (90; 80) zwischen einer hinteren Stellung, in der eine Innenwand (702a) des Zwischenrings (70) im gekuppelten Zustand der Kupplung (R) die Rastkugeln (74) in der in den Einführkanal (42) ragenden Stellung hält, und einer vorderen Stellung an einer Vorderseite des Aufnahmeteils (A), in der die Rastkugeln (74) frei entgegen der Längsachse (X-X') des Aufnahmeteils (A) gedrückt werden können, so dass sie nicht mehr in den Einführkanal (42) ragen, verschiebbar ist,
wobei das Aufnahmeteil **dadurch gekennzeichnet ist, dass** es Rasteinrichtungen (98; 94) zum Verrasten des Zwischenrings (70) in der hinteren Stellung im gekuppelten Zustand der Kupplung (R) umfasst und dass das Entrasten des Zwischenrings (70) in seine vordere Stellung durch Freigabe (F6) des Bedienelements (90; 80) in seine zweite Stellung erfolgt.

2. Schnellkupplungsaufnahmeteil nach Anspruch 1, **dadurch gekennzeichnet, dass** das Aufnahmeteil eine Innenmuffe (60) aufweist, die in der Fluidzirkulationsleitung (400) angebracht ist, wobei die Innenmuffe (60) entlang der Längsachse (X-X') des Aufnahmeteils (A) verschiebbar ist und den Zwischenring (70) beim Kuppeln des Aufnahmeteils (A) mit dem Einsteckteil (B) unter der Wirkung des Einsteckteils (B) bei dessen Einführung nach hinten mitnehmen kann, wobei die Mitnahme des Zwischenrings (70) durch mindestens eine Mitnehmerkugel (76) erfolgt, die in einem Lumen (460) einer Wand (45) des Körpers (40) verschiebbar ist und zu beiden Seiten der Wand (45) derart hervorragt, dass bei der Verschiebung der Innenmuffe (60) nach hinten eine Seite der Kugel (76) an einem Absatz (604) der Innenmuffe (60) anliegt, während eine andere Seite der Kugel (76) an einem Absatz (704a) des Zwischenrings anliegt.

3. Schnellkupplungsaufnahmeteil nach Anspruch 1, **dadurch gekennzeichnet, dass** das Aufnahmeteil eine Innenmuffe (60) aufweist, die in der Fluidzirkulationsleitung (400) angebracht ist, wobei die Innenmuffe (60) entlang der Längsachse (X-X') des Aufnahmeteils (A) verschiebbar ist und den Zwischenring (70) beim Kuppeln des Aufnahmeteils (A) mit dem Einsteckteil (B) unter der Wirkung des Einsteckteils (B) bei dessen Einführung nach hinten mitnehmen kann, wobei die Mitnahme des Zwischenrings (70) durch einen Abschnitt (610) der Innenmuffe (60) erfolgt, der sich radial durch einen Zwischenraum (462) des Körpers des Aufnahmeteils (A) erstreckt und eine axiale Kraft (F610) auf einen Absatz (710) des Zwischenrings (70) ausüben kann.

4. Schnellkupplungsaufnahmeteil nach einem der vorhergehenden Ansprüche, **dadurch gekennzeichnet, dass** das Bedienelement ein äußerer Bedienring (90) ist, der gegenüber dem Körper (40) zwischen einer ersten, vorderen Stellung und einer zweiten, hinteren Stellung verschiebbar ist, in welcher der Bedienring bei einem Entkupplungsvorgang verrastet werden kann, dass das Aufnahmeteil (A) der Schnellkupplung (R) Einrichtungen (98) zur Verrastung des Zwischenrings (70) in der hinteren Stellung im gekuppelten Zustand der Kupplung (R) umfasst, dass die Verrastung des äußeren Bedienrings (90) in der hinteren Stellung bei einem Entkupplungsvorgang der Kupplung (R) das Entrasten des Zwischenrings (70) in seine vordere Stellung auslöst und dass das Aufnahmeteil (A) eine Feder (78) umfasst, die den Zwischenring (70) in seine vordere Stellung drücken kann.

5. Schnellkupplungsaufnahmeteil nach Anspruch 4, **dadurch gekennzeichnet, dass** sich in Aufnahmen (99) des Körpers (40) angeordnete Rastkugeln (98) bei Verschiebung des äußeren Bedienrings (90) in seine hintere Stellung teilweise vom Körper (40) nach außen bewegen, um den äußeren Bedienring (90) bei dem Entkupplungsvorgang der Kupplung (R) in seiner hinteren Stellung verrastet zu halten.

6. Schnellkupplungsaufnahmeteil nach Anspruch 5, **dadurch gekennzeichnet, dass** das Entrasten des Bedienrings (90) ausgelöst wird, indem der Zwischenring (70) seine hintere Stellung erreicht, und dass das Aufnahmeteil (A) eine Feder (92) umfasst, die den Bedienring (90) in seine erste Stellung drücken kann.

7. Schnellkupplungsaufnahmeteil nach Anspruch 5, **dadurch gekennzeichnet, dass** die Rastkugel(n) (98) in der hinteren Stellung des äußeren Bedienrings (90) gleichzeitig Rastmittel zur Verrastung des Zwischenrings (70) in der hinteren Stellung bilden.

8. Schnellkupplungsaufnahmeteil nach einem der Ansprüche 1 bis 3, **dadurch gekennzeichnet, dass** das Bedienelement ein Gleitstück (80) ist, das entlang einer zur Längsachse (X-X') des Aufnahmeteils (A) quer verlaufenden Achse (X80) beweglich ist und bei dem Entkupplungsvorgang der Kupplung (R) zwischen einer ersten, eingefahrenen Stellung, in der der Zwischenring (70) mittels Rasteinrichtungen, wie zum Beispiel einem gegen einen Absatz (714) des Zwischenrings (70) hervorstehenden Stift (84) des Gleitstücks (80), in der hinteren Stellung verrastet gehalten wird, und einer zweiten, ausgefahrenen Stellung, in der der Zwischenring (70) nicht mehr in der hinteren Stellung verrastet gehalten wird, beweglich ist.

9. Schnellkupplungsaufnahmeteil nach einem der vorhergehenden Ansprüche, **dadurch gekennzeichnet, dass** das Aufnahmeteil Führungskugeln (96) zur Führung des Einsteckteils (B) umfasst, die radial in den Einführkanal (42) ragen können und in Aufnahmen (94) gelagert sind, die in einer Wand (44) des Körpers (40) des Aufnahmeteils (A) ausgebildet sind.

10. Schnellkupplungsaufnahmeteil nach Anspruch 9, **dadurch gekennzeichnet, dass** die Aufnahmen (94), in denen die Führungskugeln (96) gelagert sind, durch eine Innenfläche (70a) des Rastzwischenrings (70) begrenzt sind und dass der Rastzwischenring (70) bei seiner Bewegung in seine vordere Stellung die Führungskugeln (96) so freigibt, dass diese in eine Vertiefung (708) des Rastzwischenrings (70) gedrückt werden können und nicht mehr in den Einführkanal (42) ragen.

11. Schnellkupplungsaufnahmeteil nach den Ansprüchen 4 und 9, **dadurch gekennzeichnet, dass** die Aufnahmen (94), in denen die Führungskugeln (96) gelagert sind, durch eine Wand (904) des äußeren Bedienrings (90) begrenzt sind und dass der äußere Bedienring (90) bei seiner Bewegung in seine hintere Stellung die Führungskugeln (96) so freigibt, dass diese in ihre Aufnahmen (94) gedrückt werden können und nicht mehr in den Einführkanal (42) ragen.

12. Schnellkupplungsaufnahmeteil nach einem der vorhergehenden Ansprüche, **dadurch gekennzeichnet, dass** die Innenwand (702) des Zwischenrings (70), welche die Aufnahmen (72) der Rastkugeln (76) begrenzt, eine kegelstumpfförmige Fläche (702a) aufweist, die sich zur Hinterseite des Aufnahmeteils (A) hin erweitert.

13. Schnellkupplung (R) zur lösbaren Verbindung zweier Druckmittelleitungen, wobei die Kupplung (R) ein Einsteckteil (B) und ein Aufnahmeteil (A) umfasst, die ineinandergesteckt werden können, **dadurch gekennzeichnet, dass** es sich bei dem Aufnahmeteil (A) um das Aufnahmeteil nach einem der Ansprüche 1 bis 12 handelt.

## Claims

1. Female quick-connect coupling (R) element (A) for the detachable connection of two pressurised fluid pipes, this female element (A) being able to receive by fitting, according to a longitudinal axis (X-X') of this female element (A) and in an insertion channel (42) located on a front side of the female element (A), a male coupling element (B), this female element (A) comprising:
- a body (40) through which passes a conduit for the circulation of fluid (400),
- balls (74) for locking the male element (B) in a coupled configuration, with these locking balls (74) being positioned in radial housings (72) of the body (40) and able to protrude radially in the insertion channel (42),
- an actuating member (90; 80) mobile in translation according to a longitudinal axis (X-X'; X80) between a first position, in which the male element (B) is locked in the female element (A) in coupled configuration, and a second position, in which the male (B) and female (A) elements are in uncoupled configuration, during a disconnection manoeuvre of the male element (B) and of the female element (A),
- an intermediate locking ring (70), mobile in axial translation between a rear position, in which an internal wall (702a) of the intermediate ring (70) maintains the locking balls (74) protruding in the insertion channel (42) in coupled configuration of the coupling (R), and a front position of the front side of the female element (A), in which the locking balls (74) are free to be pushed back opposite the longitudinal axis (XX') of the female element (A) in order to no longer protrude in the insertion channel (42), under the action of the actuating member (90; 80) during the disconnection manoeuvre, this female element being **characterised in that** it comprises means (98; 94) of locking in rear position of the intermediate ring (70) in coupled configuration of the coupling (R) and **in that** the unlocking of the intermediate ring (70) towards its front position is triggered by the clearing (F6) of the actuating member (90; 80) towards its second position.

2. Female quick-connect coupling element according to claim 1, **characterised in that** it comprises an inner sleeve (60) mounted in the conduit (400) for the circulation of fluid, with the inner sleeve (60) being mobile in translation according to the longitudinal axis (X-X') of the female element (A) and adapted to drive the intermediate ring (70) towards the rear during the coupling of the female element (A) with the male element (B) under the action of the male element (B) during its insertion, with the driving of the intermediate ring (70) being carried out by at least one drive ball (76) mobile in translation in a hole (460) of a wall (45) of the body (40) and protruding on either side of this wall (45) in such a way that, during the translation towards the rear of the inner sleeve (60), one side of the ball (76) is in contact with a shoulder (604) of the inner sleeve (60) while another side of the ball (76) is in contact with a shoulder (704a) of the intermediate ring (70).

3. Female quick-connect coupling element according to claim 1, **characterised in that** it comprises an inner sleeve (60) mounted in the conduit (400) for the circulation of fluid, with the inner sleeve (60) being mobile in translation according to the longitudinal axis (X-X') of the female element (A) and adapted to drive the intermediate ring (70) towards the rear during the coupling of the female element (A) with the male element (B) under the action of the male element (B) during its insertion, with the driving of the intermediate ring (70) being carried out by a portion (610) of the inner sleeve (60), extending radially through a space (462) of the body of the female element (A) and able to exert an axial force (F610) on a shoulder (710) of the intermediate ring (70).

4. Female quick-connect coupling element according to one of the preceding claims, **characterised in that** the actuating member is an outer actuating ring (90) mobile in relation to the body (40) between a first front position and a second rear position, in which it is able to be locked, during the disconnection manoeuvre, **in that** the female quick-connect coupling (R) element (A) comprises means (98) for locking in rear position of the intermediate ring (70) in coupled configuration of the coupling (R), **in that** the locking in rear position of the outer actuating ring (90) triggers the unlocking of the intermediate ring (70) towards its front position during the disconnection manoeuvre of the coupling (R) and **in that** the female element (A) comprises a spring (78) able to push back the intermediate ring (70) towards its front position.

5. Female quick-connect coupling element according to claim 4, **characterised in that** when the outer actuating ring (90), is manoeuvred to its rear position, locking balls (98) located in housings (99) of the body (40) are retracted partially outside of the body (40) in order to maintain the outer actuating ring (90) locked in its rear position during the disconnection manoeuvre of the coupling (R).

6. Female quick-connect coupling element according to claim 5, **characterised in that** the unlocking of the actuating ring (90) is triggered by the arrival of the intermediate ring (70) in its rear position and **in that** the female element (A) comprises a spring (92) able to push back the actuating ring (90) towards its first position.

7. Female quick-connect coupling element according to claim 5, **characterised in that** the ball or balls (98) for locking in rear position of the outer actuating ring (90) also form the means for locking in rear position of the intermediate ring (70).

8. Female quick-connect coupling element according to one of claims 1 to 3, **characterised in that** the actuating member is a slide (80) mobile according to an axis (X80) perpendicular to the longitudinal axis (X-X') of the female element (A) and mobile between a first retracted position, in which the intermediate ring (70) is maintained locked in rear position using means for locking such as a pin (84) of the slide (80) protruding against a shoulder (714) of the intermediate ring (70), and a second extended position, in which the intermediate ring (70) is no longer maintained locked in rear position, during the disconnection manoeuvre of the coupling (R).

9. Female quick-connect coupling element according to one of the previous claims **characterised in that** it comprises balls (96) for guiding the male element (B), adapted to protrude radially in the insertion channel (42) and mounted in housings (94) arranged in a wall (44) of the body (40) of the female element (A).

10. Female quick-connect coupling element according to claim 9, **characterised in that** the housings (94) in which the guiding balls (96) are mounted are delimited by an internal surface (70a) of the intermediate locking ring (70) and **in that** in its movement towards its front position, the intermediate locking ring (70) releases the guiding balls (96) in such a way that they can be pushed back in a groove (708) of the intermediate locking ring (70) and no longer protrude in the insertion channel (42).

11. Female quick-connect coupling element according to claims 4 and 9, **characterised in that** the housings (94) in which the guiding balls (96) are mounted are delimited by a wall (904) of the outer actuating ring (90) and **in that**, in its movement towards its rear position, the outer actuating ring (90) releases the guiding balls (96) in such a way that they can be pushed back in their housings (94) and no longer protrude in the insertion channel (42).

12. Female quick-connect coupling element according to one of the preceding claims **characterised in that** the internal wall (702) of the intermediate ring (70), delimiting the housings (72) of the locking balls (76), has a tapered surface (702a) diverging towards the rear of the female element (A).

13. Quick-connect coupling (R) for the detachable connection of two pressurised fluid pipes, this coupling (R) comprising two elements respectively male (B) and female (A), able to fit into one another, **characterised in that** the female element (A) is according to one of claims 1 to 12.
